(19) Europäisches Patentamt
European Patent Office
Office européen des brevets

(11) Publication number: **0 124 155**
**B1**

(12) # EUROPEAN PATENT SPECIFICATION

(45) Date of publication of patent specification: **03.06.87**

(51) Int. Cl.$^4$: **C 07 F 9/65,** A 01 N 57/32

(21) Application number: **84200439.2**

(22) Date of filing: **26.03.84**

(54) **Pyrazine compounds, their preparation and their use, compositions containing them and method of combating undesired plant growth.**

(30) Priority: **29.04.83 GB 8311775**

(43) Date of publication of application:
**07.11.84 Bulletin 84/45**

(45) Publication of the grant of the patent:
**03.06.87 Bulletin 87/23**

(84) Designated Contracting States:
**AT BE CH DE FR GB IT LI LU NL SE**

(56) References cited:

**CHEMICAL ABSTRACTS, vol. 90, 1979, page 138, no. 98554q, Columbus, Ohio, US;**

(73) Proprietor: **SHELL INTERNATIONALE RESEARCH MAATSCHAPPIJ B.V.**
**Carel van Bylandtlaan 30**
**NL-2596 HR Den Haag (NL)**

(72) Inventor: **Hopwood, William John**
**24 Blandford Gardens**
**Sittingbourne Kent (GB)**

(74) Representative: **Hunter, Keith Roger Ian et al**
**4 York Road**
**London SE1 7NA (GB)**

**EP 0 124 155 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This application relates to pyrazine compounds, their preparation, their use as a herbicide, herbicidal compositions containing them, and to a method of combating undesired plant growth.

It has been found that certain novel compounds containing a pyrazine ring have useful herbicidal effects, especially against annual grasses and some broad-leaved weeds.

Specifically, the invention relates to pyrazine compounds having general formula

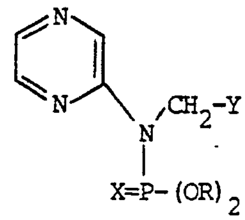 (I)

wherein X represents oxygen or sulphur; R represents a hydrogen atom, or an ammonium, alkyl of up to 6 carbon atom, phenyl or benzyl group; and Y represents an aromatic group selected from phenyl, naphthyl and anthryl, or a heteroaromatic group containing 5 or 6 ring atoms, of which up to 3 are hetero atoms selected from nitrogen, oxygen and sulphur, said aromatic or heteroaromatic group being unsubstituted or substituted by 1 or 2 substituents independently selected from cyano, halo, amino, nitro, alkoxy having up to 4 carbon atoms, haloalkoxy and haloalkyl having up to 4 carbon atoms and up to 4 bromine, chlorine or fluorine atoms, and alkyl having up to 4 carbon atoms, or at adjacent positions by the bivalent group

$$—O—(CH_2)_n—O—$$

where n is 1 or 2. It should be noted that some authors prefer to stress the dative bond character of the phosphorus-oxygen (or sulphur) bond, namely by drawing it as X⩽P⩽, which obviously describes the same molecules as those drawn with X=P⩽.

The compounds are phosphoramidic acids, or salts or esters thereof, which may also be termed amidophosphoric acids, according to an organic or an inorganic angle of incidence. In this application the compounds are referred to as substituted N-pyrazinlyphosphoramidates, or, more shortly, to phosphoramidates.

When X represents sulphur, the compounds of the invention may be called thiophosphoramidates. Preferably, however, X represents an oxygen atom. For convenience, the term phosphoramidates is used herein to include thiophosphoramidates.

The phosphoramidate esters may be derived from alcohols ROH. When R represents an $C_1—C_6$ alkyl group, it preferably has up to four carbon atoms. The two groups R need not be the same. Especially preferred lower alkyl groups R are methyl, ethyl, propyl and isopropyl, in particular ethyl groups.

When Y represents an unsubstituted or substituted heteroaromatic group, preferred groups are thienyl, furyl, pyrrolyl, pyridyl, imidazolyl, pyrazolyl, pyrazinyl, pyrimidinyl, pyridazinyl, isothiazolyl, isoxazolyl, furazanyl and triazinyl groups. When Y represents an optionally substituted aromatic group, this is preferably a phenyl group. Excellent results are obtained when Y represents unsubstituted or substituted phenyl, thienly, furyl or pyridyl group.

The optional substituent(s) in the group represented by Y are preferably cyano, chloro, bromo, fluoro, methoxy, trifluoromethyl or methyl.

When the aromatic or heteroaromatic group is six-membered, the, or a substituent is located preferably at a position para to the point of attachment of the (hetero)aromatic group to the rest of the molecule of the compound according to formula I.

A particularly preferred compound according to the formula I is O,O-diethyl N-pyrazinly-N-(4-chlorobenzyl)phosphoramidate, ie the compound wherein X=0, Y=4-Cl-phenyl and $R=C_2H_5$.

The invention also provides a process for the preparation of a compound according to the invention, suitably by a coupling of the different building blocks to the amidate nitrogen atom, in the same way as tertiary amines are prepared from secondary or primary amines.

Suitably a compound of formula

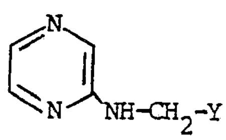 (II) or 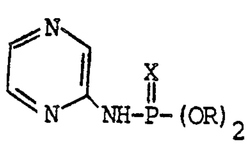 (III)

that is, a secondary amine or an amide, is reacted with a compound of formula

A—P—(OR)₂
‖
X (IV)

or Y—$CH_2$—A (V).

respectively, wherein X, Y and R have the meanings defined above, and A represents a suitable leaving group.

Suitable leaving groups A include carboxylates, and — more suitably — halogen atoms, e.g. bromine or chlorine atoms (the compounds of formula IV being acid halides). Suitably a diluting agent, e.g. a solvent, is present, as well as a scavenging agent for the other reaction product, HA. Preferably the leaving group A is a halogen atom, and the reaction is preferably carried out in the presence of an acid-binding agent.

The compounds of formulae II and III are obtainable commercially or are prepared from primary amines via an azomethine as depicted below:

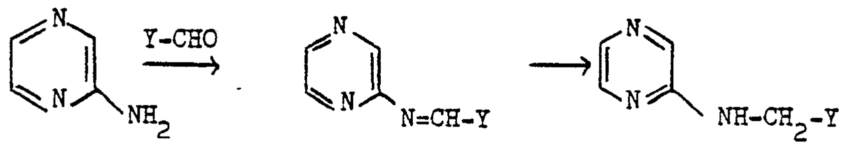


(II)

or by acylation of aminopyrazine with the compound of formula IV, respectively.

The reactions mentioned hereinabove are carried out preferably at temperatures between 0°C and 180°C, in particular between 20°C and 150°C, and at atmospheric pressure. Suitable acid-binding agents include all usual organic and inorganic acid-acceptors, e.g. alkali metal carbonates such as $Na_2CO_3$ and $K_2CO_3$, or tertiary amines, such as triethylamine. Suitable diluting agents include all usual inert organic solvents, e.g. benzene, dimethoxyethane, tetrahydrofuran, carbon tetrachloride, acetonitrile, dimethylformamide and toluene. The reactants are generally employed in substantially equimolar quantities, although it may be preferred sometimes to employ one of the reactants in excess to the other; for example an excess of the compounds of formulae IV or V may be used.

As mentioned above, the phosphoramidates of the invention are of interest as herbicides. Accordingly, the invention includes the use of compound according to the invention as a herbicide, and a herbicidal composition, which comprises a compound according to formula I, together with a carrier. Furthermore the invention relates to a method of combating undesired plant growth, in particular undesired broad leaved grass growth, at a locus which comprises treating the locus with a compound or a composition according to the invention. The method may be used for the control of weeds in a wide variety of crops, for example, wheat, barley, rice, other small grain cereals and legumes. Application may be pre-emergence or post-emergence. The dosage of active ingredient used may, for example, be from 0.05 to 4kg/ha. A particular advantage of the present invention is the prolonged activity, ie. the longer the length of time after application, the better the herbicidal effects obtained. This applies especially to pre-emergence treatments.

A carrier in a composition according to the invention is any material with which the active ingredient is formulated to facilitate application to the locus to be treated, or to facilitate storage, transport or handling. A carrier may be a solid or a liquid, including a material which is normally gaseous but which has been compressed to form a liquid, and any of the carriers normally used in formulating agricultural compositions may be used. Preferably compositions according to the invention contain 0.5 to 95% by weight of active ingredient.

Suitable solid carriers include natural and synthetic clays and silicates, for example natural silicas such as diatomaceous earths; magnesium silicate, for example talcs; magnesium aluminium silicates, for example attaplugites and vermiculites; aluminium silicates, for example kaolinites, montomorillonites and micas; calcium carbonate; calcium sulphate, ammonium sulphate; synthetic hydrated silicon oxides and synthetic calcium or aluminium silicates; elements, for example carbon and sulphur; natural and synthetic resins, for example coumarone resins, polyvinyl chloride, and styrene polymers and copolymers; solid polychlorophenols; bitumen; waxes, for example beeswax, paraffin wax, and chlorinated mineral waxes; and solid fertilisers, for example superphosphates.

Suitable liquid carriers include water; alcohols, for example isopropanol and glycols; ketones, for example acetone, methyl ethyl ketone, methyl isobuyl keton and cyclohexanone; ethers; aromatic or araliphatic hydrocarbons, for example benzene, toluene and xylene; petroleum fractions, for example kerosine and light mineral oils; and chlorinated hydrocarbons, for example carbon tetrachloride, perchloroethylene and trichloroethane. Mixtures of different liquids are often suitable.

Agricultural compositions are often formulated and transported in a concentrated form which is subsequently diluted by the user before application. The presence of small amounts of carrier which is a surface-active agent facilitates this process of dilution. Thus preferably at least one carrier in a composition according to the invention is a surface-active agent. For example the composition may contain at least two carriers, at least one of which is a surface-active agent.

A surface-active agent may be an emulsifying agent, a dispersing agent or a wetting agent; it may be nonionic or ionic. Examples of suitable surface-active agents include the sodium or calcium salts of polyacrylic acids and lignin sulphonic acids; the condensation products of fatty acids or aliphatic amines or amides containing at least 12 carbon atoms in the molecule with ethylene oxide and/or propylene oxide; fatty acid esters of glycerol, sorbitan, sucrose or pentaerythritol; condensates of these with ethylene oxide and/or propylene oxide; condensation products of fatty alcohol or alkyl phenols, for example p-octylphenol or p-octylcresol, with ethylene oxide and/or propylene oxide; sulphates or sulphonates of these

condensation products; alkali or alkaline earth metal salts, preferably sodium salts, of sulphuric or sulphonic acid esters containing at least 10 carbon atoms in the molecule, for example sodium lauryl sulphate, sodium secondary alkyl sulphates, sodium salts of sulphonated castor oil, and sodium alkylaryl sulphonates such as sodium dodecylbenzene sulphonate; and polymers of ethylene oxide and copolymers of ethylene oxide and propylene oxide.

The compositions of the invention may for example be formulated as wettable powders, dusts, granules, solutions, emulsifiable concentrates, emulsions, suspension concentrates and aerosols. Wettable powders usually contain 25, 50 or 75% w of active ingredient and usually contain in addition to solid inert carrier, 3—10% w of stabiliser(s) and/or other additives such as penetrants or stickers. Dusts are usually formulated as dust concentrate having a similar composition to that of a wettable powder but without a dispersant, and are diluted in the field with further solid carrier to give a composition usually containing ½—10% w of active ingredient. Granules are usually prepared to have a size between 10 and 100 BS mesh (1.676—0.152mm), and may be manufactured by agglomeration or impregnation techniques. Generally, granules will contain ½—75% w active ingredient and 0—10% w of additives such as stabilisers, surfactants, slow release modifiers and binding agents. The so-called "dry flowable powders" consist of relatively small granules having a relatively high concentration of active ingredient. Emulsifiable concentrates usually contain, in addition to a solvent and, when necessary, co-solvent, 10—50% w/v active ingredient, 2—20% w/v emulsifiers and 0—20% w/v of other additives such as stabilisers, penetrants and corrosion inhibitors. Suspension concentrates are usually compounded so as to obtain a stable, non-sedimenting flowable product and usually contain 10—75% w of suspending agents such as protective colloids and thixotropic agents, 0—10% w of other additives such as defoamers, corrosion inhibitors, stabilisers, penetrants and stickers, and water or an organic liquid in which the active ingredient is substantially insoluble; certain organic solids or inorganic salts may be present dissolved in the formulation to assist in preventing sedimentation or as anti-freeze agents for water.

Aqueous dispersions and emulsions, for example compositions obtained by diluting a wettable powder or a concentrate according to the invention with water, also lie within the scope of the present invention. The said emulsions may be of the water-in-oil or of the oil-in-water type, and may have a thick 'mayonnaise'-like consistency.

The compositions of the invention may also contain other ingredients, for example, other compounds possessing herbicidal, insecticidal or fungicidal properties.

The following Examples illustrate the invention.

### Example 1

Diethyl N-(4-chlorobenzyl)-N-pyrazinylphosphoramidate

A 50% sodium hydride/oil mixture (2.4g) was washed with dry toluene (3×50ml) to remove traces of oil, filtered, and added to 100ml dimethoxyethane (DME) which had been dried over sodium. To this mixture was added with stirring 10.8g N-(4-chlorobenzyl)pyrazinylamine, and this mixture was stirred for approximately one day. Then 8.6g (7.6ml) chlorodiethylphosphate in 20ml DME was added and the reaction mixture was stirred for another two days, while the progress of the reaction was being monitored by regular thin layer chromatography, using ethyl acetate as eluent. The DME was evaporated, and the residual brown gum was chromatographed on a silica gel column using ethyl acetate as the eluent. Yield 12.6g (71.2% molar).

| Analysis (%w) | C | H | N | P |
|---|---|---|---|---|
| Calculated for $C_{15}H_{19}ClN_3O_3P$ | 50.6 | 5.4 | 11.8 | 8.4 |
| Found | 51.4 | 5.4 | 12.3 | 8.5 |

Main peak of the mass spectrogram at:

| | |
|---|---|
| Calculated for $C_{15}H_{19}ClN_3O_3P$ | 355.76 |
| Found ($M^+$) | 355 |

### Example 2

Diethyl N-(4-trifluoromethylbenzyl)-N-pyrazinylphosphoramidate

A 50% sodium hydride/oil mixture (1.2g) was washed with 3×50ml toluene to remove traces of oil, filtered, and added to 4.6g diethyl N-pyrazinylphosphoramidate in 50ml dimethoxyethane. This mixture was warmed to 50°C and stirred at this temperature for 16 hours. After cooling to 20°C, 4.8g 4-trifluoromethylbenzyl bromide was added, and the reaction mixture was again warmed to 50°C, with stirring, for two days. After evaporating the solvent and treating the residue with water and diethyl ether, the ether layer was separated off, dried over $Na_2SO_4$, and substantially evaporated. The concentrated residue was chromatographed on silica gel column using diethyl ether as the eluent. Yield 1.4g of a yellow gum (18.4%).

| Analysis (%w) | C | H | N |
|---|---|---|---|
| Calculated for $C_{16}H_{19}F_3N_3O_3P$ | 49.4 | 4.9 | 10.8 |
| Found | 49.6 | 5.0 | 10.6 |

$M^+$ found 390 (calculated 389.31)

Examples 3—22

By methods analogous to Example 1, the compounds of Examples 3—18 were prepared, and by methods analogous to Example 2, the compounds of Examples 4, 9, 19—22 were prepared. Details are given in Table I. The elemental analysis figures found are given under those calculated.

TABLE I

| Example No. | X | In Formula I | | Analysis (%w) | | | m.p. C° | M+ |
|---|---|---|---|---|---|---|---|---|
| | | R | Y | C | H | N | | |
| 3 | O | $C_2H_5$ | 3,4-dichlorophenyl | 46.2<br>45.6 | 4.6<br>4.5 | 10.8<br>10.8 | gum | 390 |
| 4 | O | $C_2H_5$ | phenyl | 56.1<br>56.2 | 6.2<br>6.6 | 13.1<br>12.6 | gum | 321 |
| 5 | O | $C_2H_5$ | 2-methyl-5-thienyl | 49.3<br>49.1 | 5.9<br>6.0 | 12.3<br>12.6 | gum | 341 |
| 6 | O | $C_2H_5$ | 2,4-dichlorophenyl | 46.2<br>46.1 | 4.6<br>4.7 | 10.8<br>10.4 | 68—70 | 389 |
| 7 | O | $C_2H_5$ | 2-methyl-5-furyl | 51.7<br>51.9 | 6.1<br>6.2 | 12.9<br>12.3 | gum | 325 |
| 8 | O | $C_2H_5$ | 3-chlorophenyl | 50.6<br>51.0 | 5.4<br>5.4 | 11.8<br>11.4 | gum | 356 |
| 9 | O | $C_2H_5$ | p-tolyl | 57.3<br>57.4 | 6.6<br>6.9 | 12.5<br>12.0 | gum | 335 |
| 10 | O | $C_2H_5$ | 2-bromo-5-thienyl | 38.4<br>38.9 | 4.2<br>4.3 | 10.4<br>10.5 | gum | 406 |
| 11 | O | $C_6H_5$ | 4-chlorophenyl | 61.1<br>61.3 | 4.2<br>4.4 | 9.3<br>8.6 | gum | 451 |

TABLE I continued

| Example No. | X | In Formula I | | Analysis (%w) | | | m.p. C° | $M^+$ |
|---|---|---|---|---|---|---|---|---|
| | | R | Y | C | H | N | | |
| 12 | O | $C_2H_5$ | 1,3-benzodioxol-5-yl (1,3-dioxa-5-indanyl) | 52.6<br>52.7 | 5.5<br>6.0 | 11.5<br>10.9 | gum | 365 |
| 13 | O | $C_2H_5$ | 4-fluorophenyl | 53.1<br>53.1 | 5.6<br>5.7 | 12.4<br>12.4 | gum | 339 |
| 14 | O | $C_2H_5$ | 2-furyl | 50.2<br>50.4 | 5.8<br>5.7 | 13.5<br>13.4 | 36—38 | 311 |
| 15 | O | $C_2H_5$ | 3-pyridyl | 52.2<br>52.1 | 5.9<br>6.2 | 17.4<br>17.4 | gum | 322 |
| 16 | S | $C_2H_5$ | 4-chlorophenyl | 47.3<br>47.6 | 5.2<br>5.1 | 11.0<br>10.8 | 62—64 | 371 |
| 17 | O | $C_2H_5$ | 4-methoxyphenyl | 54.7<br>54.5 | 6.3<br>6.1 | 12.0<br>11.6 | gum | 351 |
| 18 | O | $C_2H_5$ | 4-bromophenyl | 45.0<br>45.3 | 4.8<br>5.0 | 10.5<br>10.6 | gum | 399 |
| 19 | O | $C_2H_5$ | 4-nitrophenyl | 49.2<br>49.1 | 5.2<br>5.5 | 15.3<br>14.8 | gum | 366 |
| 20* | O | $C_2H_5$ | 3-nitrophenyl | 48.0<br>48.3 | 5.3<br>5.3 | 14.9<br>14.9 | gum | 366 |

TABLE I continued

| Example No. | X | In Formula I | | Analysis (%w) | | | m.p. C° | $M^+$ |
|---|---|---|---|---|---|---|---|---|
| | | R | Y | C | H | N | | |
| 21 | O | i-$C_3H_7$ | 4-nitrophenyl | 49.5<br>49.4 | 6.1<br>6.2 | 13.6<br>13.0 | gum | 394 |
| 22* | O | $C_2H_5$ | 4-cyanophenyl | 54.1<br>54.3 | 5.6<br>5.5 | 15.8<br>15.3 | gum | 346 |

*The analysis figures refer to the hemihydrate.

Example 23

Herbicidal Activity

To evaluate their herbicidal activity, compounds according to the invention were tested using as a representative range of plants: maize, *Zea mays* (Mz); rice, *Oryza sativa* (R); barnyard grass, *Echinochloa crusgalli* (BG); oat, *Avena sativa* (O); linseed, *Linum usitatissisum* (L); mustard, *Sinapsis alba* (M); sugar beet, *Beta vulgaris* (SB) and soya bean, *Glycine max* (S).

The tests fall into two categories, pre-emergence and post-emergence. The pre-emergence tests involved spraying a liquid formulation of the compound onto the soil in which the seeds of the plant species mentioned above had recently been sown. The post-emergence tests involved two types of test, viz., soil drench and foliar spray tests. In the soil drench tests the soil in which the seedling plants of the above species were growing were drenched with a liquid formulation containing a compound of the invention, and in the foliar spray tests the seedling plants were sprayed with such a formulation.

The soil used in the tests was a prepared horticultural loam.

The formulations used in the tests were prepared by diluting with water, solutions of the test compounds in acetone containing 0.4% by weight of an alkylphenol/ethylene oxide condensate available under the trade mark TRITON X—155. The acetone solutions were diluted with water and the resulting formulations applied at dosage levels corresponding to 5 kg and/or 1 kg of active material per hectare in a volume equivalent to 600 litres per hectare in a volume equivalent to 600 litres per hectare in the soil spray and foliar spray tests, and at a dosage level equivalent to 10 kilograms of active meterial per hectare in a volume equivalent to approximately 3,000 litres per hectare in the soil drench tests.

In the pre-emergence tests untreated sown soil and in the post-emergence tests untreated soil bearing seedling plants were used as controls.

The herbicidal effects of the test compounds were assessed visually twelve days after spraying the foliage and the soil, and thirteen days after drenching the soil and were recorded on a 0—9 scale. A rating 0 indicates growth as untreated control, a rating 9 indicates death. An increase of 1 unit on the linear scale approximates to a 10% increase in the level of effect. A hyphen indicates not tested or no result for another reason.

The results of the tests are set out in Table II below.

TABLE II

| Compound of Example No. | Soil Drench 10 kg/ha | | | | | | | | Dosage kg/ha | Foliar Spray | | | | | | | | Pre-emergence | | | | | | | |
|---|---|---|---|---|---|---|---|---|---|---|---|---|---|---|---|---|---|---|---|---|---|---|---|---|---|
| | Mz | R | BG | O | L | M | SB | S | | Mz | R | BG | O | L | M | SB | S | Mz | R | BG | O | L | M | SB | S |
| 1 | 7 | 6 | 7 | 6 | 6 | 7 | 7 | 5 | 5 | 2 | 2 | 8 | 6 | 7 | 8 | 6 | 6 | 7 | — | 9 | 6 | 5 | 7 | 8 | 8 |
| | | | | | | | | | 1 | 0 | 0 | 7 | 2 | 5 | 6 | 4 | 5 | 6 | — | 8 | 2 | 2 | 5 | 5 | 3 |
| 2 | 6 | 6 | 8 | 6 | 4 | 5 | 6 | 2 | 5 | 4 | 2 | 8 | 4 | 7 | 8 | 8 | 7 | 7 | 7 | 9 | 1 | 1 | 3 | 3 | 3 |
| | | | | | | | | | 1 | 0 | 0 | 4 | 2 | 5 | 6 | 6 | 5 | 2 | 2 | 8 | 0 | 0 | 2 | 2 | 3 |
| 3 | 0 | 0 | 0 | 0 | 0 | 0 | 0 | 0 | 5 | 1 | 1 | 8 | 2 | 6 | 6 | 7 | 6 | 2 | 4 | 7 | 2 | 5 | 3 | 5 | 0 |
| | | | | | | | | | 1 | 1 | — | 5 | 2 | 5 | 4 | 4 | 5 | 0 | 0 | 3 | 0 | 0 | 2 | 0 | 0 |
| 4 | 2 | 0 | 5 | 0 | 4 | 6 | 5 | 8 | 5 | 0 | 2 | 5 | 3 | 4 | 6 | 4 | 5 | 0 | 0 | 6 | 0 | 2 | 5 | 6 | 3 |
| | | | | | | | | | 1 | 0 | 0 | 2 | 0 | 0 | 3 | 2 | 4 | 0 | 0 | 3 | 0 | 0 | 4 | 6 | 2 |
| 5 | 6 | 5 | 5 | 2 | 3 | 5 | 5 | 7 | 5 | 5 | 0 | 6 | 4 | 5 | 7 | 4 | 6 | 4 | 3 | 8 | 0 | 4 | 4 | 6 | 3 |
| | | | | | | | | | 1 | 3 | 0 | 3 | 0 | 0 | 2 | 0 | 4 | 0 | 0 | 6 | 0 | 2 | 3 | 4 | 0 |
| 6 | 5 | 3 | 4 | 0 | 0 | 3 | 4 | 0 | 5 | 0 | 0 | 5 | 0 | 6 | 6 | 4 | 7 | 3 | 0 | 6 | 0 | 4 | 5 | 4 | 0 |
| | | | | | | | | | 1 | 0 | 0 | 3 | 0 | 0 | 2 | 0 | 4 | 0 | 0 | 4 | 0 | 0 | 2 | 2 | 0 |
| 7 | 7 | 6 | 7 | 0 | 3 | 4 | 5 | 7 | 5 | 0 | 0 | 5 | 0 | 0 | 2 | 0 | 0 | 0 | 0 | 7 | 0 | — | 4 | 6 | 3 |
| | | | | | | | | | 1 | 0 | 0 | 2 | 0 | 0 | 0 | 0 | 0 | 0 | 0 | 5 | 0 | — | 2 | 4 | 0 |
| 8 | 6 | 5 | 7 | 0 | 0 | 4 | 3 | 7 | 5 | 0 | 0 | 7 | 2 | 5 | 6 | 6 | 6 | 0 | 0 | 6 | 0 | 0 | 4 | 6 | 3 |
| | | | | | | | | | 1 | 0 | 0 | 4 | 0 | 3 | 3 | 2 | 5 | 0 | 0 | 2 | 0 | 0 | 3 | 3 | 0 |

TABLE II continued

| Compound of Example No. | Soil Drench 10 kg/ha | | | | | | | | Dosage kg/ha | Foliar Spray | | | | | | | | Pre-emergence | | | | | | | |
|---|---|---|---|---|---|---|---|---|---|---|---|---|---|---|---|---|---|---|---|---|---|---|---|---|---|
| | Mz | R | BG | O | L | M | SB | S | | Mz | R | BG | O | L | M | SB | S | Mz | R | BG | O | L | M | SB | S |
| 9 | 7 | 6 | 7 | 5 | 4 | 5 | 5 | 7 | 5 | 1 | 0 | 7 | 0 | 5 | 6 | 6 | 6 | 4 | 4 | 7 | 0 | 3 | 5 | 7 | 6 |
| | | | | | | | | | 1 | 0 | 0 | 4 | 0 | 4 | 4 | 4 | 4 | 0 | 0 | 6 | 0 | 2 | 4 | 6 | 5 |
| 10 | 6 | 6 | 7 | 2 | 5 | 6 | 6 | 6 | 5 | 0 | 3 | 7 | 2 | 4 | 8 | 7 | 6 | 0 | 0 | 7 | 0 | 3 | 5 | 6 | 5 |
| | | | | | | | | | 1 | 0 | 0 | 5 | 0 | 3 | 3 | 6 | 5 | 0 | 0 | 5 | 0 | 0 | 4 | 4 | 2 |
| 11 | 0 | 0 | 5 | 0 | 0 | 3 | 2 | 0 | 5 | — | — | — | — | — | — | — | — | — | — | — | — | — | — | — | — |
| | | | | | | | | | 1 | 0 | 0 | 2 | 0 | 3 | 4 | 6 | 2 | 0 | 0 | 3 | 0 | 3 | 4 | 2 | 0 |
| 12 | 6 | 7 | 7 | 6 | 5 | 6 | 6 | 8 | 5 | 4 | 5 | 6 | 4 | 4 | 8 | 6 | 7 | 6 | 3 | 8 | 5 | 3 | 5 | 6 | 6 |
| | | | | | | | | | 1 | 0 | 0 | 5 | 2 | 3 | 5 | 5 | 5 | 4 | 0 | 7 | 1 | 0 | 4 | 6 | 4 |
| 13 | 6 | 7 | 7 | 4 | 4 | 5 | 6 | 7 | 5 | 0 | 5 | 7 | 5 | 4 | 8 | 6 | 8 | 6 | 5 | 8 | 6 | 2 | 5 | 7 | 5 |
| | | | | | | | | | 1 | 0 | 2 | 6 | 2 | 2 | 3 | 4 | 6 | 0 | 0 | 6 | 0 | 0 | 4 | 6 | 2 |
| 14 | 4 | 5 | 6 | 2 | 3 | 4 | 6 | 7 | 5 | 0 | 0 | 5 | 2 | 3 | 4 | 4 | 5 | 0 | 0 | 6 | 2 | 0 | 3 | 4 | 0 |
| | | | | | | | | | 1 | 0 | 0 | 0 | 2 | 0 | 1 | 0 | 2 | 2 | 0 | 0 | 0 | 0 | 0 | 2 | 3 |
| 16 | 0 | 0 | 5 | 0 | 2 | 2 | 6 | 0 | 5 | 0 | 0 | 6 | 0 | 5 | 6 | 6 | 6 | 2 | 0 | 6 | 0 | 0 | 4 | 6 | 4 |
| | | | | | | | | | 1 | 0 | 0 | 6 | 0 | 4 | 5 | 5 | 5 | 0 | 0 | 6 | 0 | 0 | 3 | 4 | 0 |
| 17 | 6 | 6 | 6 | 5 | 5 | 6 | 6 | 6 | 5 | 5 | 2 | 8 | 2 | 5 | 6 | 7 | 7 | 5 | 8 | 7 | 7 | 0 | 5 | 7 | 5 |
| | | | | | | | | | 1 | 0 | 0 | 3 | 0 | 3 | 4 | 6 | 5 | 4 | 5 | 7 | 4 | 0 | 4 | 6 | 3 |

TABLE II continued

| Compound of Example No. | Soil Drench 10 kg/ha | | | | | | | | Dosage kg/ha | Foliar Spray | | | | | | | | Pre-emergence | | | | | | | |
|---|---|---|---|---|---|---|---|---|---|---|---|---|---|---|---|---|---|---|---|---|---|---|---|---|---|
| | Mz | R | BG | O | L | M | SB | S | | Mz | R | BG | O | L | M | SB | S | Mz | R | BG | O | L | M | SB | S |
| 18 | 5 | 6 | 6 | 4 | 5 | 6 | 6 | 6 | 5 | 2 | 0 | 8 | 1 | 5 | 6 | 7 | 6 | 5 | 7 | 7 | 6 | 5 | 5 | 7 | 3 |
| | | | | | | | | | 1 | 0 | 0 | 6 | 0 | 3 | 5 | 6 | 6 | 2 | 6 | 7 | 4 | 3 | 4 | 5 | 0 |
| 19 | 2 | 6 | 6 | 5 | 4 | 4 | 4 | 6 | 5 | — | — | — | — | — | — | — | — | — | — | — | — | — | — | — | — |
| | | | | | | | | | 1 | 0 | 0 | 2 | 0 | 2 | 0 | 2 | 2 | 0 | 0 | 2 | 0 | 0 | 2 | 4 | 0 |
| 21 | 0 | 0 | 3 | 0 | 2 | 0 | 4 | 0 | 5 | — | — | — | — | — | — | — | — | — | — | — | — | — | — | — | — |
| | | | | | | | | | 1 | 0 | 0 | 0 | 0 | 0 | 3 | 3 | 2 | 0 | 0 | 0 | 0 | 0 | 0 | 0 | 0 |
| 22 | 7 | 6 | 7 | 6 | 6 | 7 | 7 | 5 | 5 | 2 | 2 | 8 | 6 | 7 | 8 | 6 | 6 | 7 | — | 9 | 6 | 5 | 7 | 8 | 8 |
| | | | | | | | | | 1 | 0 | 0 | 7 | 2 | 5 | 6 | 4 | 5 | 6 | — | 8 | 2 | 2 | 5 | 5 | 3 |

**Claims for the Contracting States BE CH DE FR GB IT LI LU NL SE**

1. A pyrazine compound having the general formula

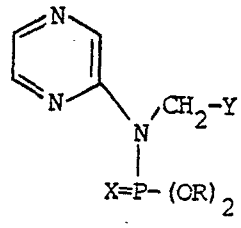

(I)

wherein X represents oxygen or sulphur; R represents a hydrogen atom, or an ammonium, alkyl of up to 6 carbon atom, phenyl or benzyl group; and Y represents an aromatic group selected from phenyl, naphthyl and anthryl, or a heteroaromatic group containing 5 or 6 ring atoms, of which up to 3 are hetero atoms selected from nitrogen, oxygen and sulphur, said aromatic or heteroaromatic group being unsubstituted or substituted by 1 or 2 substituents independently selected from cyano, halo, amino, nitro, alkoxy having up to 4 carbon atoms, haloalkoxy and haloalkyl having up to 4 carbon atoms and up to 4 bromine, chlorine or fluorine atoms, and alkyl having up to 4 carbon atoms, or at adjacent positions by the bivalent group

$$—O—(CH^2)^n—O—$$

where n is 1 or 2.

2. A compound as claimed in claim 1, wherein R represents an alkyl group of up to four carbon atoms, or a phenyl group.

3. A compound as claimed in claims 1 or 2, wherein X represents an oxygen atom.

4. A compound as claimed in claims 1, 2 or 3, wherein Y represents an optionally substituted phenyl, thienyl, furyl or pyridyl group.

5. O,O-diethyl N-pyrazinyl-N-(4-chlorobenzyl)phosphoramidate.

6. Process for the preparation of a compound as defined in claim 1, wherein a compound of formula

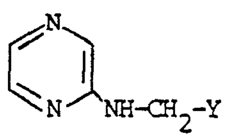

(II) or

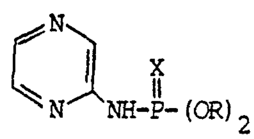

(III)

is reacted with a compound of formula

$$A—\underset{\underset{X}{\|}}{P}—(OR)^2 \quad (IV) \qquad \text{or} \qquad Y—CH^2—A \quad (V)$$

respectively, wherein X, Y and R have the meanings defined in claim 1, and A represents a suitable leaving group.

7. A process as claimed in claim 6, wherein the leaving group is a halogen atom, and the reaction is carried out in the presence of an acid-binding agent.

8. Herbicidal composition, which comprises a compound as defined in any one of claims 1 to 5, together with a carrier.

9. A composition as claimed in claim 8, which comprises at least two carriers, at least one of which is a surface-active agent.

10. Method of combating undesired plant growth at a locus, which comprises treating the locus with a compound as claimed in any one of claims 1 to 5, or a composition as claimed in either of claims 8 or 9.

11. Use of a compound as claimed in any one of claims 1 to 5 as a herbicide.

**Claims for the Contracting State AT**

1. Herbicidal composition comprising an active ingredient and a carrier, characterised in that the active ingredient is a pyrazine compound having the general formula

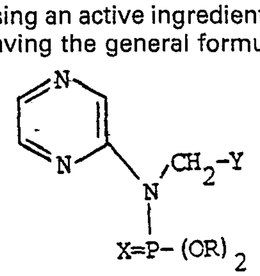

(I)

wherein X represents oxygen or sulphur; R represents a hydrogen atom, or an ammonium, alkyl of up to 6 carbon atom, phenyl or benzyl group; and Y represents an aromatic group selected from phenyl, naphthyl and anthryl, or a heteroaromatic group containing 5 or 6 ring atoms, of which up to 3 are hetero atoms selected from nitrogen, oxygen and sulphur, said aromatic or heteroaromatic group being unsubstituted or substituted by 1 or 2 substituents independently selected from cyano, halo, amino, nitro, alkoxy having up to 4 carbon atoms, haloalkoxy and haloalkyl having up to 4 carbon atoms and up to 4 bromine, chlorine or fluorine atoms, and alkyl having up to 4 carbon atoms, or at adjacent positions by the bivalent group

$$—O—(CH^2)^n—O—$$

where n is 1 or 2.

2. A composition as claimed in claim 1, wherein R represents an alkyl group of up to four carbon atoms, or a phenyl group.

3. A composition as claimed in claims 1 or 2, wherein X represents an oxygen atom.

4. A composition as claimed in claims 1, 2 or 3, wherein Y represents an optionally substituted phenyl, thienyl, furyl or pyridyl group.

5. A composition as claimed in claim 1, wherein the active ingredient is O,O-diethyl N-pyrazinyl-N-(4-chlorobenzyl)phosphoramidate.

6. A composition as claimed in any preceding claim, comprising at least two carriers at least one of which is a surface-active agent.

7. Process for the preparation of a compound of formula I as defined in claim 1, wherein a compound of formula

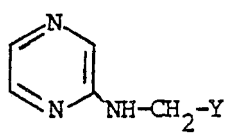 (II) or 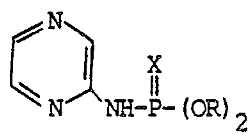 (III)

is reacted with a compound of formula

A—P(=X)—(OR)$^2$ (IV) or Y—CH$^2$—A (V)

respectively, wherein X, Y and R have the meanings defined in claim 1, and A represents a suitable leaving group.

8. A process as claimed in claim 7, wherein the leaving group is a halogen atom, and the reaction is carried out in the presence of an acid-binding agent.

9. Method of combating undesired plant growth at a locus, which comprises treating the locus with a compound of formula I as defined in any one of claims 1 to 5.

10. Use of a compound as claimed in any one of claims 1 to 5 as a herbicide.

**Patentansprüche für die Vertragsstaaten: BE CH DE FR GB IT LI LU NL SE**

1. Eine Pyrazinverbindung mit der allgemeinen Formel

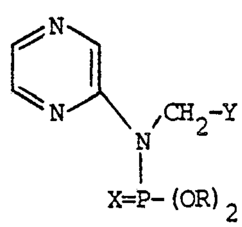

(I)

worin X für Sauerstoff oder Schwefel steht; R ein Wasserstoffatom oder eine Ammoniumgruppe, eine Alkylgruppe mit bis zu 6 Kohlenstoffatomen, eine Phenylgruppe oder eine Benzylgruppe darstellt; und Y eine aromatische Gruppe, ausgewählt unter Phenyl, Naphthyl und Anthryl, oder eine heteroaromatische Gruppe mit 5 oder 6 Ringatomen, von denen bis zu 3 unter Stickstoff, Sauerstoff, Schwefel ausgewählte Heteroatome sind, bedeutet, welche aromatische oder heteroaromatische Gruppe unsubstituiert oder durch einen oder zwei Substituenten, die unabhängig unter Cyan, Halogen, Amino, Nitro, Alkoxy mit bis zu 4 Kohlenstoffatomen, Halogenalkoxy und Halogenalkyl mit bis zu 4 Kohlenstoffatomen und bis zu 4 Brom-, Chlor- oder Fluoratomen, und Alkyl mit bis zu 4 Kohlenstoffatomen ausgewählt sind, oder an benachbarten Positionen durch die zweiwertige Gruppe

$$—O—(CH_2)_n—O—$$

worin n den Wert 1 oder 2 aufweist, substituiert ist.

2. Verbindung nach Anspruch 1, worin R eine Alkylgruppe mit bis zu 4 Kohlenstoffatomen oder eine Phenylgruppe darstellt.

3. Verbindung nach Anspruch 1 oder 2, worin X ein Sauerstoffatom darstellt.

4. Verbindung nach Anspruch 1, 2 oder 3, worin Y eine gegebenenfalls substituierte Phenyl-, Thienyl-, Furyl- oder Pyridylgruppe bedeutet.

5. O,O-Diethyl-N-pyrazinyl-N-(4-chlorbenzyl)phosphoramidat.

6. Verfahren zur Herstellung einer Verbindung der Formel I, wie in Anspruch 1 definiert, worin eine Verbindung der Formel

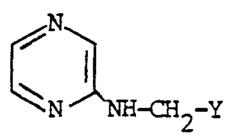 (II) oder 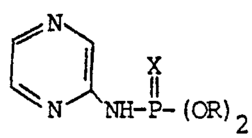 (III)

mit einer Verbindung der Formel

A—P(=X)—$(OR)_2$ (IV) bzw. Y—$CH_2$—A, (V)

worin X, Y und R die in Anspruch 1 definierten Bedeutungen aufweisen und A eine geeignete Leaving-Gruppe darstellt, umgesetzt wird.

7. Verfahren nach Anspruch 6, worin die Leaving-Gruppe ein Halogenatom ist und die Umsetzung in Gegenwart eines säurebindenden Mittels ausgeführt wird.

8. Herbizide Zusammensetzung, welche eine Verbindung, wie in einem der Ansprüche 1 bis 5 definiert, zusammen mit einem Träger umfaßt.

9. Zusammensetzung nach Anspruch 8, welche wenigstens zwei Träger unfaßt, von denen wenigstens einer ein oberflächenaktives Mittel ist.

10. Verfahren zur Bekämpfun von unerwünschtem Pflanzenwachstum an einem Ort, welches ein Behandeln des Ortes mit einer Verbindung, wie in einem der Ansprüche 1 bis 5 beansprucht, oder mit einer Zusammensetzung, wie in Anspruch 8 oder 9 beansprucht, umfaßt.

11. Verwendung einer Verbindung, wie in einem der Ansprüche 1 bis 5 beansprucht, als ein Herbizid.

**Patentansprüche für den Vertragsstaat: AT**

1. Herbizide Zusammensetzung, umfassend einen aktiven Bestandteil und eine Träger, dadurch gekennzeichnet, daß der aktive Bestandteil eine Pyrazinverbindung der allgemeinen Formel

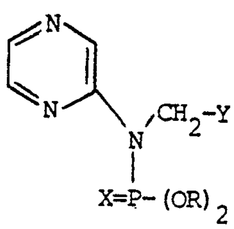 (I)

ist,

worin X für Sauerstoff oder Schwefel steht; R ein Wasserstoffatom oder eine Ammoniumgruppe, eine Alkylgruppe mit bis zu 6 Kohlenstoffatomen, eine Phenylgruppe oder eine Benzylgruppe darstellt; und Y eine aromatische Gruppe, ausgewählt unter Phenyl, Naphthyl und Anthryl, oder eine heteroaromatische Gruppe mit 5 oder 6 Ringatomen, von denen bis zu 3 unter Stickstoff, Sauerstoff, Schwefel ausgewählte Heteroatome sind, bedeutet, welche aromatische oder heteroaromatische Gruppe unsubstituiert oder durch einen oder zwei Substituenten, die unabhängig unter Cyan, Halogen, Amino, Nitro, Alkoxy mit bis zu 4 Kohlenstoffatomen, Halogenalkoxy und Halogenalkyl mit bis zu 4 Kohlenstoffatomen und bis zu 4 Brom-, Chlor- oder Fluoratomen, und Alkyl mit bis zu 4 Kohlenstoffatomen ausgewählt sind, oder an benachbarten Positionen durch die zweiwertige Gruppe

$$—O—(CH_2)_n—O—$$

worin n den 1 oder 2 aufweist, substituiert ist.

2. Zusammensetzung nach Anspruch 1, worin R eine Alkylgruppe mit bis zu 4 Kohlenstoffatomen oder eine Phenylgruppe bedeutet.

3. Zusammensetzung nach Anspruch 1 oder 2, worin X ein Sauerstoffatom darstellt.

4. Zusammensetzung nach einem der Anspruch 1, 2 oder 3, worin Y eine gegebenenfalls substituierte Phenyl-, Thienyl-, Furyl- oder Pyridylgruppe bedeutet.

5. Zusammensetzung nach Anspruch 1, worin der aktive Bestandteil O,O-Diethyl-N-pyrazinyl-N-(4-chlorbenzyl)phosphoramidat ist.

6. Zusammensetzung nach einem der vorstehenden Ansprüche, umfassend wenigstens zwei Träger, von denen wenigstens einer ein oberflächenaktives Mittel ist.

7. Verfahren zur Herstellung einer Verbindung der Formel I, wie in Anspruch 1 definiert, worin eine Verbindung der Formel

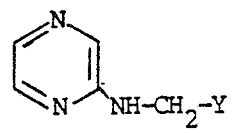 (II) oder 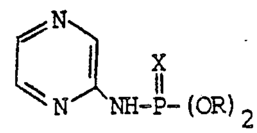 (III)

mit einer Verbindung der Formel

$A-P(=X)-(OR)_2$ bzw. $Y-CH_2-A$, (V)

worin X, Y und R die in Anspruch 1 definierten Bedeutungen aufweisen und A eine geeignete Leaving-Gruppe darstellt, umgesetzt wird.

8. Verfahren nach Anspruch 7, worin die Leaving-Gruppe ein Halogenatom ist und die Umsetzung in Gegenwart eines säurebindenden Mittels ausgeführt wird.

9. Verfahren zur Bekämpfung von unerwü nschtem Pflanzenwachstum an einem Ort, welches ein Behandeln des Ortes mit einer Verbindung der Formel I, wie in einem der Ansprüche 1 bis 5 definiert, umfaßt.

10. Verwendung einer Verbindung, wie in einem der Ansprüche 1 bis 5 definiert, als ein Herbizid.

**Revendications pour les états contractants BE CH DE FR GB IT LI LU NL SE**

1. Un composé pyranzinique répondant à la formule générale

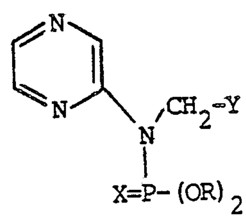 (I)

dans laquelle X représente un oxygène ou un soufre; R représente un atome d'hydrogène ou un groupe ammonium, alkyle ayant jusqu'à 6 atomes de carbone, phényle ou benzyle; et Y représente un groupe aromatique choisi parmi un phényle, un naphtyle et un anthryle, ou un groupe hétéro-aromatique contenant 5 ou 6 atomes cycliques, dont jusqu'à 3 sont des hétéro-atomes choisis parmi l'azote, l'oxygène et le soufre, ledit groupe aromatique ou hétéro-aromatique étant non substitué ou substitué par 1 ou 2 substituants choisis indépendamment parmi un cyano, un halogéno, un amino, un nitro, un alcoxy ayant jusqu'à 4 atomes de carbone, un halogéno-alcoxy et un halogénoalkyle ayant jusqu'à 4 atomes de carbone et jusqu'à 4 atomes de brome, de chlore ou de fluor et un alkyle ayant jusqu'à 4 atomes de carbone ou sur des positions adjacentes par le groupe bivalent

$$-O-(CH_2)_n-O-$$

où n est 1 ou 2.

2. Un composé comme revendiqué dans la revendication 1, où R représente un groupe alkyle ayant jusqu'à 4 atomes de carbone ou un groupe phényle.

3. Un composé comme revendiqué dans les revendications 1 ou 2 où X représente un atome d'oxygène.

4. Un composé comme revendiqué dans les revendications 1, 2 ou 3 où Y représente un groupe phényle, thiényle, furyle ou pyridyle éventuellement substitués.

5. O,O-diéthyl N-pyrazinyl-N-(4-chlorbenzyl)phosphoramidate.

6. Procédé pour la préparation d'un composé comme défini dans la revendication 1, dans lequel on fait réagir un composé de formule

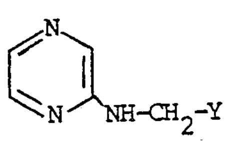 (II) oder 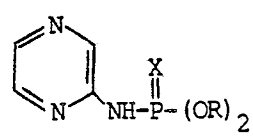 (III)

avec respectivement un composé de formule

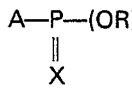 (IV) ou $Y—CH_2—A$ (V)

où X, Y et R ont les significations définies dans la revendication 1 et A représente un groupe labile approprié.

7. Un procédé comme revendiqué dans la revendication 6, dans lequel le groupe labile est un atome d'halogène et la réaction est effectuée en présence d'un agent fixant les acides.

8. Composition herbicide qui comprend un composé comme défini dans l'une quelconque des revendications 1 à 5 avec un support.

9. Une composition comme revendiqué dans la revendication 8, qui comprend au moins deux supports dont au moins un est un agent tensio-actif.

10. Procédé de lutte contre la croissance des plantes indésirables en un site qui comprend le traitement du site avec un composé comme revendiqué dans l'une quelconque des revendications 1 à 5 ou avec une composition comme revendiqué dans l'une des revendications 8 ou 9.

11. Emploi d'un composé comme revendiqué dans l'une quelconque des revendications 1 à 5 comme herbicide.

**Revendications pur l'état contractant AT**

1. Composition herbicide comprenant un ingrédient actif et un support, caractérisé en ce que l'ingrédient actif est un composé pyrazinique répondant à la formule générale

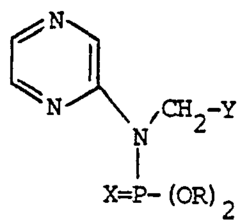

(I)

dans laquelle X représente un oxygène ou un soufre; R représente un atome d'hydrogène ou un groupe ammonium, alkyle ayant jusqu'à 6 atomes de carbone, phényle ou benzyle; et Y représente un groupe aromatique choisi parmi un phényle, un naphtyle et un anthryle, ou un groupe hétéro-aromatique contenant 5 ou 6 atomes cycliques, dont jusqu'à 3 sont des hétéro-atomes choisis parmi l'azote, l'oxygène et le soufre, ledit groupe aromatique ou hétéro-aromatique étant non substitué ou substitué par 1 ou 2 substituants choisis indépendamment parmi un cyano, un halogéno, un amino, un nitro, un alcoxy ayant jusqu'à 4 atomes de carbone, un halogéno-alcoxy et un halogénoalkyle ayant jusqu'à 4 atomes de carbone et jusqu'à 4 atomes de brome, de chlore ou de fluor et un alkyle ayant jusqu'à 4 atomes de carbone ou sur des positions adjacentes par le groupe bivalent

$$—O—(CH_2)_n—O—$$

où n est 1 ou 2.

2. Une composition comme revendiqué dans la revendication 1, dans laquelle R représente un groupe alkyle ayant jusqu'à 4 atomes de carbone ou un groupe phényle.

3. Une composition comme revendiqué dans les revendications 1 ou 2, dans laquelle X représente un atome d'oxygène.

4. Une composition comme revendiqué dans les revendications 1, 2 ou 3, dans laquelle Y représente un groupe phényle, thiényle, furyle ou pyridyle éventuellement substitués.

5. Une composition comme revendiqué dans la revendication 1, dans laquelle l'ingrédient actif est l'O,O-diéthyl N-pyrazinyl-N-(4-chlorbenzyl)phosphoramidate.

6. Une composition comme revendiqué dans l'une quelconque des revendications précédentes, comprenant au moins deux supports dont un au moins est un agent tensio-actif.

7. Procédé pour la préparation d'un composé comme de formule I comme défini dans la revendication 1 dans lequel on fait réagir un composé de formule

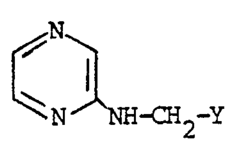 (II) oder 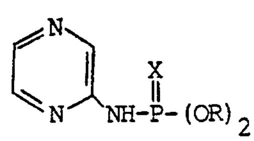 (III)

respectivement avec un composé de formule

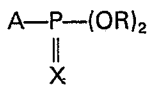 ou $Y—CH_2—A$ (V)

(IV)

où X, Y et R ont les significations définies dans la revendication 1 et A représente un groupe labile approprié.

8. Un procédé comme revendiqué dans la revendication 7, dans lequel le groupe labile est un atome d'halogène et la réaction est effectuée en présence d'un agent fixant les acides.

9. Procédé pour lutter contre la croissance des plantes indésirables en un site qui comprend le traitement du site avec un composé de formule I comme défini dans l'une quelconque des revendications 1 à 5.

10. Emploi d'un composé comme défini dans l'une quelconque des revendications 1 à 5 comme herbicide.